# EUROPEAN PATENT APPLICATION

(11) **EP 2 104 212 A1**
(43) Date of publication of application: **23.09.2009**
(21) Application number: 08152899.4
(22) Date of filing: 18.03.2008
(51) Int. Cl.: H02M 3/156, H02M 1/14, H05B 41/292

(54) **Method and device for driving a HID lamp**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

A switched mode power supply (10; 20; 30) for driving a load (11) comprises:
- an inductor (L) in series with the load;
- at least one controllable coil switch (12; M1, M2) in series with the inductor (L);
- a controller (14) for controlling the coil switch.

The controller repeatedly opens and closes the coil switch at a substantially constant switching frequency (f_{S}), so that the coil current (I_{L}) varies between a minimum value and a maximum value of the same polarity while the load current (I_{OUT}) is substantially constant with a current ripple.

According to the invention, the switching moments of the coil switch are randomized. As a result, the frequency spectrum of the current ripple has a wider and lower peak, and a ripple suppression capacitor can be made smaller or even omitted.

## Description

### FIELD OF THE INVENTION

The present invention relates in general to a method and device for driving a gas discharge lamp, using a switched mode power supply and constant, possibly commutating lamp current. The present invention relates specifically to the driving of a High Intensity Discharge lamp (HID), i.e. a high-pressure lamp, such as for instance a high-pressure sodium lamp, a high-pressure mercury lamp, a metal-halide lamp. In the following, the invention will be specifically explained for a HID lamp, but application of the invention is not restricted to a HID lamp, as the invention can be more generally applied to other types of gas discharge lamps.

### BACKGROUND OF THE INVENTION

Gas discharge lamps are known in the art, so an elaborate explanation of gas discharge lamps is not needed here. Suffice it to say that a gas discharge lamp comprises two electrodes located in a closed vessel filled with an ionizable gas or vapour. The vessel is typically quartz or a ceramic, specifically polychrystalline alumina (PCA). The electrodes are arranged at a certain distance from each other, and during operation an electric arc is maintained between those electrodes.

Specific types of gas discharge lamps have been developed for specific use in different applications, such as a projection system, an illumination system.

A discharge lamp can be operated with constant current (DC), or with commutating current (commutating DC, or Low Frequency Square Wave LFSW), which means that the lamp current has a constant magnitude but the current direction is regularly alternating at a relatively low frequency, typically in the order of about 50-150 Hz.

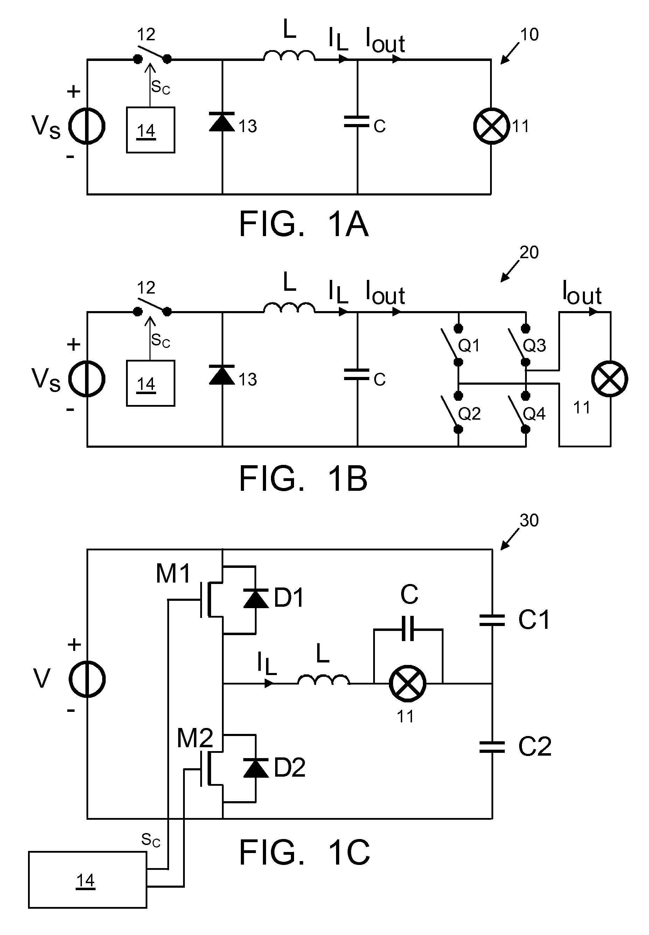

For a switched mode power supply, different designs are possible. Figure 1A schematically shows a block diagram of an exemplary prior art lamp driver 10 implemented as a down converter, for DC operation of a gas discharge lamp 11. Figure 1B schematically shows a prior art lamp driver 20 implemented as a down converter, for LFSW operation with a full bridge commutation circuit. Figure 1C schematically shows a prior art lamp driver 30 implemented as a full bridge commutating forward circuit, for LFSW operation. Other types are also possible.

Since such prior art drivers should be known to persons skilled in the art, the design and functioning will be described only briefly. The driver 10 comprises a source of substantially constant voltage V, connected in series with a controllable switch 12 and an inductor L. This controllable switch 12 will hereinafter be indicated by the phrase "coil switch", as it switches the coil current of the power supply. The design of the voltage source is not relevant for the present invention. A diode 13 is connected between the negative output rail and the node between the coil switch 12 and the inductor L. The lamp 11 is connected between the negative output rail and the other terminal of the inductor L. A capacitor C is connected in parallel to the lamp 11.

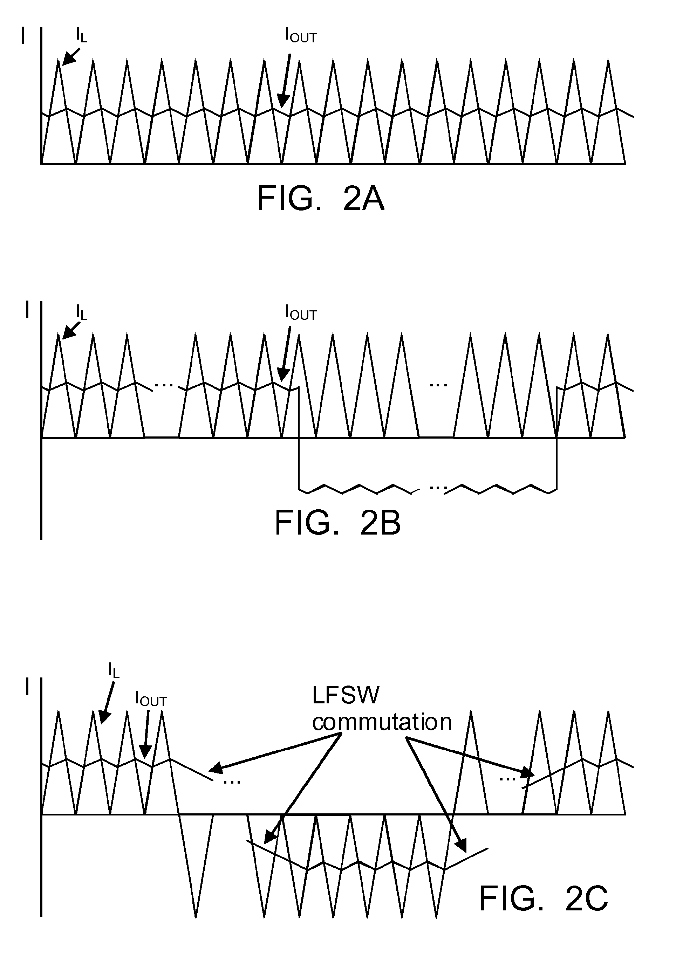

A controller 14 repeatedly opens and closes the coil switch 12, at a relatively high frequency typically in the range of about 100 kHz, which will be indicated as the switching frequency f_{S}. Figure 2A shows the resulting coil current (curve I_{L}) and the resulting lamp current (curve I_{OUT}). The lamp current and the coil current each have a triangular shape. The coil current varies between a maximum value and a minimum value, which typically is zero. The lamp current varies between a maximum value and a minimum value, which are close together. Thus, the lamp current can be considered to be a constant current with a small ripple current.

The second driver 20 deviates from the first driver 10 in that a commutation circuit, comprising four controllable switches Q1, Q2, Q3, Q4, is added between the inductor L and the lamp 11. A controller (which may be the controller 14 but which may also be a separate controller) repeatedly opens and closes the switches Q1, Q2, Q3, Q4, at a relatively low commutation frequency f_{C}, typically in the order of about 50-150 Hz, in any case much lower than the switching frequency f_{S}. Either Q1 and Q4 are conductive, or Q2 and Q3 are conductive. When Q1 and Q4 are conductive, current is flowing in one direction; when Q2 and Q3 are conductive, current is flowing in the opposite direction. The coil current I_{L} is the same as in the case of the first driver 10. Also the magnitude of the lamp current I_{OUT} is the same as in the case of the first driver 10, but the lamp current repeatedly changes direction, determined by the switching of the four switches Q1, Q2, Q3, Q4. Thus, again, the lamp current can be considered to be a constant current (albeit with changing direction) with a small ripple current, as shown in figure 2B.

The third driver 30 comprises two controllable switches M1 and M2 arranged in series, with corresponding diodes D1, D2, between two voltage rails coupled to the source of substantially constant voltage V. Two capacitors C1 and C2 are also arranged in series between the two voltage rails. The lamp 11 is coupled between on the one hand the junction between the two switches M1 and M2 and on the other hand the junction between the two capacitors C1 and C2, with the inductor L arranged in series with the lamp 11 and the capacitor C arranged in parallel with the lamp 11. The two switches M1 and M2 are controlled by a controller 14, and function to provide both commutation and switching.

The operation is as follows. In a first state, the lower switch M2 is continuously open (i.e. non-conductive) and the upper switch M1 is repeatedly opened and closed, thus functioning as coil switch comparable to the switching of coil switch 12 in the first driver 10 of figure 1A. The resulting shape of coil current I_{L} and lamp current I_{OUT} is the same as in the case of the first driver 10, as shown at the lefthand side of figure 2C. In a second state, the upper switch M1 is continuously open (i.e. non-conductive) and the lower switch M2 is repeatedly opened and closed, thus functioning as coil switch comparable to the switching of coil switch 12 in the first driver 10 of figure 1A. The resulting shape of coil current I_{L} and lamp current I_{OUT} is again the same as in the case of the first driver 10, but now in the opposite current direction, as shown in the middle of figure 2C.

The circuit is successively in its first and second state, switching between the first and second state taking place at a relatively low frequency. Thus, again, the lamp current can be considered to be a constant current (albeit with changing direction) with a small ripple current, comparable to the lamp current of the second driver 20. Only on commutation, i.e. the transition of direction for the lamp current, the lamp current needs some time to change direction, as illustrated.

It is noted that the above description, and the corresponding illustration in figure 2, models the current behavior in a somewhat idealistic manner, under the assumption that the lamp voltage is constant. In reality, the current waveform may deviate somewhat from the triangular waveform, but for sake of simplicity this triangular waveform will continued to be used in explaining the present invention.

### SUMMARY OF THE INVENTION

In general, the current ripple at the switching frequency f_{S} is undesirable. The current ripple may lead to resonance in the lamp. Further, the current ripple may lead to EMC problems. The function of the capacitor C in parallel to the lamp is to suppress this ripple.

For an adequate suppression, the parallel capacitor C needs to have a relatively large capacitance value, which entails a relatively large physical size and relatively high costs. A further disadvantage of a relatively large capacitance value is that it reduces the commutation speed and the control speed: changing a current setting of the driver requires more time. A fast control speed is particularly important in applications where fast changes in the light output level are required, for instance in video projection.

Thus, it is desirable to reduce the size of the capacitor.

An object of the present invention is to eliminate or at least reduce the above-mentioned problems.

Specifically, an object of the present invention is to provide a lamp driver in which the size of the ripple suppression capacitor can be reduced while still achieving adequate ripple suppression.

According to an important aspect of the present invention, the switching moments of the coil switch are randomized. As a result, the lamp current ripple will show random phase jumps, so that the lamp current, in stead of a relatively sharp peak at the switching frequency, will have a wider and lower peak in the frequency spectrum. This reduces problems associated with current ripple, and the suppression capacitor may be smaller or even omitted entirely, resulting in improved commutation speed and control speed.

Further advantageous elaborations are mentioned in the dependent claims.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
Figures 1A-1C are block diagrams schematically illustrating different switched mode lamp driver designs;
Figures 2A-2C are time diagrams schematically illustrating coil current and lamp current in the different lamp driver designs of figures 1A-1C, respectively;
Figure 3 is a time diagram for illustrating random switching according to the present invention;
Figure 4A and 4B are time diagrams comparable to figure 3, showing illustrating random switching according to the present invention in different embodiments;
Figure 5 is a graph, comparable to figure 2A, illustrating the effect of the random switching according to the present invention;
Figures 6-7 are graphs illustrating the current frequency spectra of lamp current in some exemplary simulations.

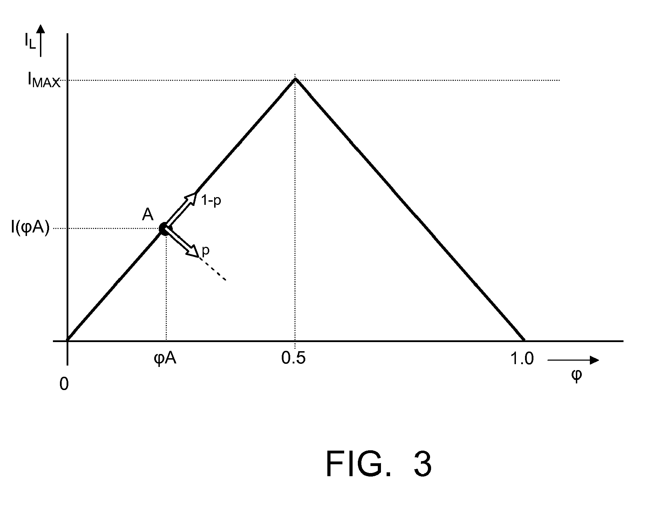

Figure 3 is a time diagram, illustrating the coil current I_{L} in one complete current cycle or current period on a larger scale. The horizontal axis represents phase ϕ. The phase ϕ is defined as time t divided by the current period T, with T = 1/f_{S}, so that the phase ϕ ranges from 0 to 1 for a complete current period. The phase ϕ is taken to be zero when the coil current reaches is lowest magnitude and the coil switch is closed (i.e. made conductive) so that the coil current magnitude starts to increase. In the present explanation, it is assumed that the lowest current magnitude is equal to zero, but it is noted that this is not essential: the lowest current magnitude may be larger than zero.

For describing the behavior of the controller 14, it is first noted that the controller 14 generates a coil switch control signal SC causing the coil switch (12; M1, M2) to be opened/closed at the coil switching frequency f_{S}. As far as this control signal SC is concerned, the controller 14 is either in a first control state in which it generates the coil switch control signal SC having a first value causing the coil switch (12; M1, M2) to be closed (i.e. conductive), or in a second control state in which it generates the coil switch control signal SC having a second value causing the coil switch (12; M1, M2) to be open (i.e. non-conductive). The first control state of the controller 14 corresponds to a first half of the current period with ϕ between 0 and 0.5, where the coil current magnitude I_{L} is increasing; the second control state of the controller 14 corresponds to a second half of the current period with ϕ between 0.5 and 1, where the coil current magnitude I_{L} is decreasing. For sake of simplicity, the first control state will be indicated as "UP" state and the second control state will be indicated as "DOWN" state. Likewise, the first half of the current period will be indicated as "UP" period and the second half of the current period will be indicated as "DOWN" period.

According to the present invention, at least one decision moment is defined in each current period. Such decision moment is indicated at A in figure 3, as a point on the current curve. It can be seen that the decision moment corresponds to a certain phase ϕA and a certain current magnitude I_{L}(ϕA). In the following, it will be assumed that the decision moment is defined in terms of phase, but it is to be noted that it is also possible that the decision moment is defined in terms of current magnitude. Further, in the following, the phase ϕA of a decision moment will be indicated as a "decision phase".

According to the present invention, when reaching the decision moment, the controller 14 makes a random decision as to whether or not to change its control state. The chance that the controller 14 decides to change its control state is indicated by probability p, a number between 0 and 1. Obviously, the chance that the controller 14 decides to maintain its control state is equal to 1-p.

In the example of figure 3, the decision moment A is during the UP period, when the controller 14 is in its UP state. Thus, at decision moment A, there is a chance 1-p that the controller 14 remains in its UP state and that the current magnitude continues to rise, and there is a chance p that the controller 14 switches over to its DOWN state, and opens the coil switch 12 so that the current magnitude starts decreasing again. It should be clear that, in that case, the current magnitude starts decreasing before reaching the maximum current level I_{MAX} which it was supposed to reach at ϕ = 0.5. From this moment onwards, the coil current follows a downwards sloping path, identical to the path the current would have followed when the phase would be equal to 1-ϕA. Effectively, the coil current makes a phase jump Δϕ equal to 1-2·ϕA.

The above explanation relates to one current period. It is noted that the same decision moment A is present in each of the current periods, wherein the decision phase ϕA of the decision moment A is always the same, and wherein the decision probability p is always the same.

In the embodiment illustrated in figure 3, there is only one decision moment A. However, it is possible that there are multiple decision moments in one current period.

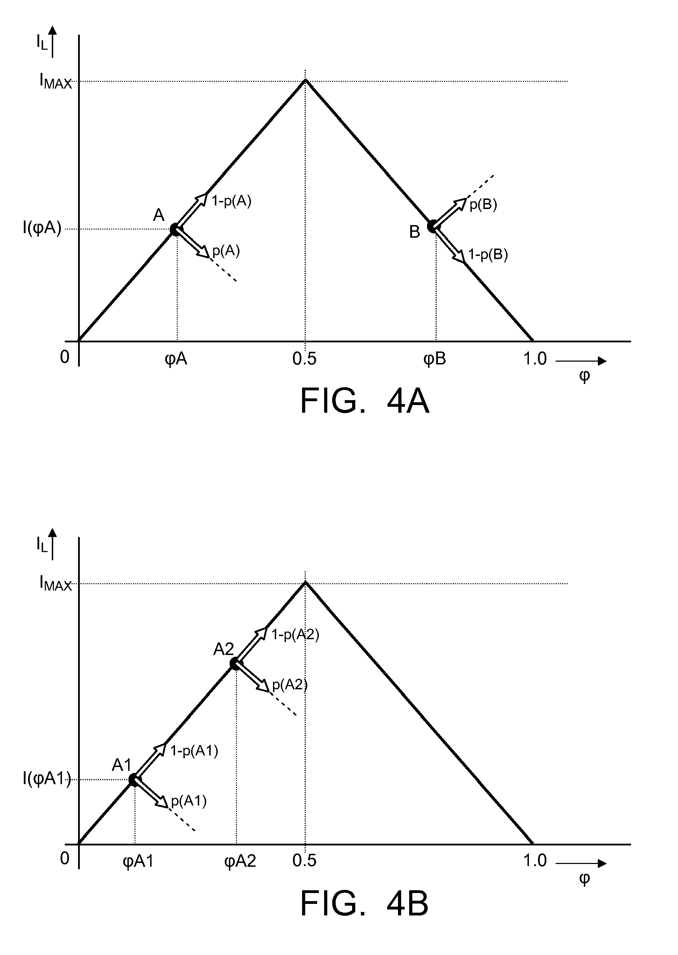

Figure 4A is a graph comparable to figure 3, illustrating an embodiment with a second decision moment B during the DOWN period, when the controller 14 is in its DOWN state. At this second decision moment B, there is a chance 1-p(B) that the controller 14 remains in its DOWN state and that the current magnitude continues to decrease, and there is a chance p(B) that the controller 14 switches over to its UP state, and closes the coil switch 12 so that the current magnitude starts rising again. It should be clear that, in that case, the current magnitude starts rising before reaching zero, which it was supposed to reach at ϕ = 1.

A designer, designing software for the controller 14, may decide to have random switching during the UP periods only (figure 3), or to have random switching during both the UP periods and the DOWN periods (figure 4A). Here, several considerations play a role. In the case of operation with random switching during the UP periods only (figure 3), the average current magnitude will be lowered. On the other hand, closing the coil switch 12 at non-zero current may in some circuit implementations cause problems.

In principle, the second decision moment B may be defined independently from the first decision moment A, regarding phase and probability. However, for reasons of symmetry and simplicity, it is preferred that the decision phase ϕB of the second decision moment B is equal to 1-ϕA, and that the second decision probability p(B) is equal to the first probability p(A).

Figure 4B is a graph comparable to figure 3, illustrating an embodiment with two decision moments A1 and A2 during the UP period. In principle, the second decision moment A2 may be defined independently from the first decision moment A1, regarding phase and probability. However, for reasons of symmetry and simplicity, it is preferred that the second decision phase ϕA2 of the second decision moment A2 is equal to 0.5-ϕA1, and that the second probability p(A2) at the second decision moment A2 is equal to the first probability p(A1) at the first decision moment A1.

Further, it is noted that the number of decision moments in each half current period may be higher than two.

In a preferred embodiment with only one decision moment in a half current period, the decision phase is equal to 0.25. In a variation, the decision phase is equal to 0.375, which can offer similar results if the probability P is increased.

In a preferred embodiment with two decision moments in a half current period, the decision phases are equal to 0.125 and 0.375.

In a preferred embodiment with three decision moments in a half current period, the decision phases are equal to 0.125, 0.25 and 0.375.

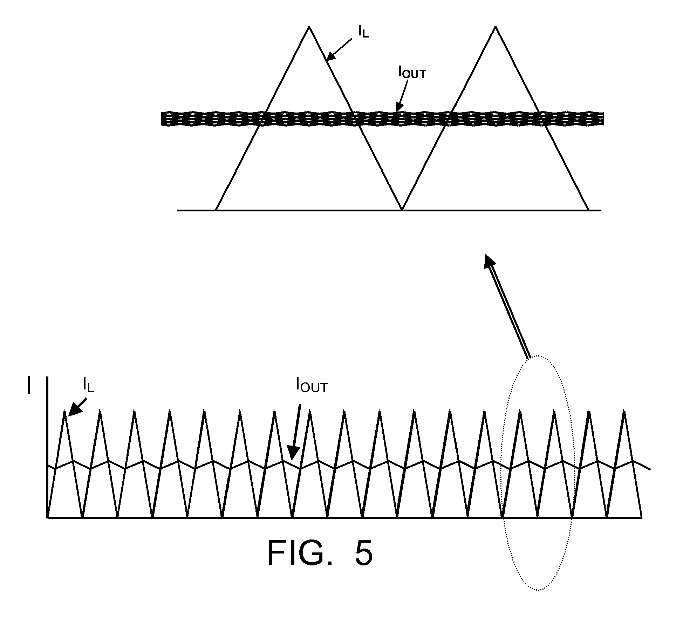

Figure 5 is a graph, comparable to figure 2A, illustrating the effect of the random switching according to the present invention, for an embodiment with three decision moments in each half current period, the decision phases being equal to 0.125, 0.25, 0.375, 0.625, 0.75, and 0.875.

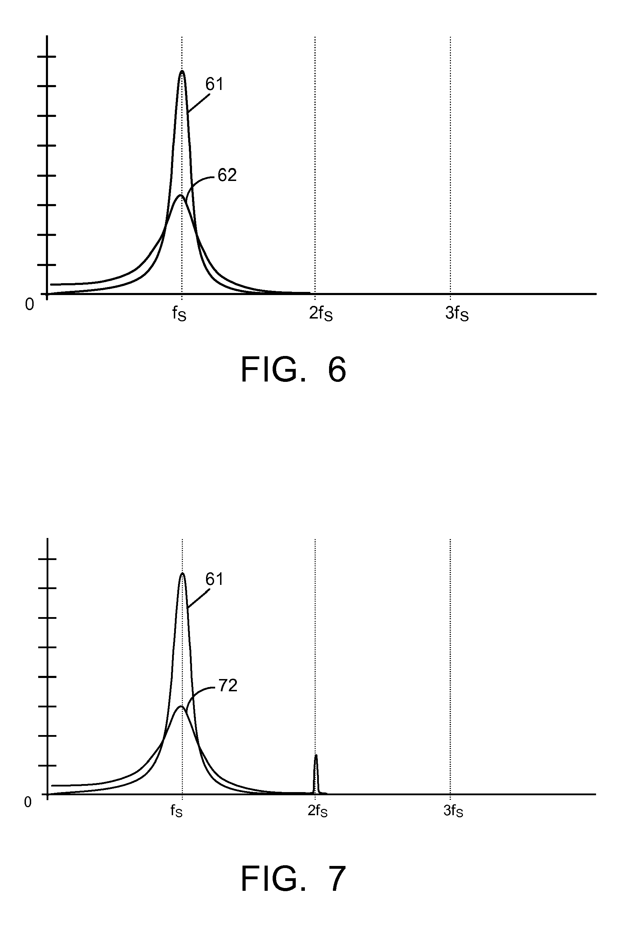

Figure 6 is a graph illustrating a calculated Fourier spectrum of the current for a simulation of an embodiment with one decision moment in each half current period, the decision phases being equal to 0.25 and 0.75, the probability p being equal to 0.1 (curve 61) or being equal to 0.2 (curve 62). It can be seen that, as the probability p is increased, the frequency peak at the switching frequency f_{S} is lowered and widened.

Figure 7 is a graph comparable to figure 6, for a simulation of an embodiment with one decision moment in the UP periods only (no decision moments in the DOWN periods), the decision phase being equal to 0.25, the probability p being equal to 0.4 (curve 72). It can be seen that this frequency spectrum is very similar to the frequency spectrum for the embodiment of figure 6 with probability p=0.2 (curve 62), but this requires p to be roughly twice as high. As a consequence, a higher peak at 2f_{S} is observed.

In a specific simulated example, a down converter 10 (figure 1A) was operated at a switching frequency f_{S} of 100 kHz and an average lamp current I_{OUT} of 2 A. Without a ripple suppression capacitor, the ripple current in the coil would be 1.33 A_{RMS}, which would be too high for a lamp to handle. When operated with random switching according to the present invention, with one decision moment in the UP periods only (no decision moments in the DOWN periods), the decision phase being equal to 0.25, the probability p being equal to 0.2, the current ripple was reduced by 33dB in a 10 Hz bandwidth around the switching frequency fs.

Summarizing, the present invention provides a switched mode power supply 10; 20; 30 for driving a load 11, which supply comprises:
- an inductor L in series with the load;
- at least one controllable coil switch 12; M1, M2 in series with the inductor L;
- and a controller 14 for controlling the coil switch.

The controller repeatedly opens and closes the coil switch at a substantially constant switching frequency f_{S}, so that the coil current I_{L} varies between a minimum value and a maximum value of the same polarity while the load current I_{OUT} is substantially constant with a current ripple.

According to the invention, the switching moments of the coil switch are randomized. As a result, the frequency spectrum of the current ripple has a wider and lower peak, and a ripple suppression capacitor can be made smaller or even omitted.

While the invention has been illustrated and described in detail in the drawings and foregoing description, it should be clear to a person skilled in the art that such illustration and description are to be considered illustrative or exemplary and not restrictive. The invention is not limited to the disclosed embodiments; rather, several variations and modifications are possible within the protective scope of the invention as defined in the appending claims.

For instance, it is possible that the power supply is used in a motor driver, where it may reduce the effect of torque variations or vibrations/noise.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

In the above, the present invention has been explained with reference to block diagrams, which illustrate functional blocks of the device according to the present invention. It is to be understood that one or more of these functional blocks may be implemented in hardware, where the function of such functional block is performed by individual hardware components, but it is also possible that one or more of these functional blocks are implemented in software, so that the function of such functional block is performed by one or more program lines of a computer program or a programmable device such as a microprocessor, microcontroller, digital signal processor, etc.

## Claims

1. Switched mode power supply (10; 20; 30) for driving a load (11), the supply comprising:
- an inductor (L) in series with the load;
- at least one controllable coil switch (12; M1, M2) in series with the inductor (L);
- a controller (14) for controlling the coil switch;
wherein the controller is designed for repeatedly switching the coil switch open and closed at a substantially constant switching frequency (f_{S}), so that, at least during a first time interval larger than the current period (1/f_{S}), a coil current (I_{L}) varies between a minimum value and a maximum value of the same polarity while the load current (I_{OUT}) is substantially constant with a current ripple;
wherein the switching moments of the coil switch are randomized.

2. Switched mode power supply according to claim 1, wherein the minimum coil current value is zero.

3. Switched mode power supply according to claim 1, wherein during a second time interval the coil current (I_{L}) varies between a minimum value and a maximum value of a polarity opposite to the polarity of the coil current during the first interval, while the load current (I_{OUT}) has a polarity opposite to the polarity of the load current during the first interval.

4. Switched mode power supply according to claim 1, wherein the controller is designed, at a predetermined decision moment (A; B) having a predetermined decision phase (ϕA; ϕB) in each current period, to randomly change the switching state of the coil switch, with a probability p that the switching state of the coil switch is changed and a probability 1-p that the switching state of the coil switch is maintained.

5. Switched mode power supply according to claim 4, wherein the controller only has one or more decision moments during an UP part of the current period when the coil switch is conductive.

6. Switched mode power supply according to claim 4, wherein the controller has multiple equidistant decision moments (A1, A2) during an UP part of the current period when the coil switch is conductive.

7. Switched mode power supply according to claim 6, wherein the probabilities (p(A1, p(A2)) at all decision moments are mutually equal.

8. Switched mode power supply according to claim 4, wherein the controller has at least one first decision moment (A) during an UP part of the current period when the coil switch is conductive and at least one second decision moment (B) during a DOWN part of the current period when the coil switch is non-conductive.

9. Switched mode power supply according to claim 8, wherein ϕB = 1 - ϕA applies,
ϕB being the decision phase of the second decision moment (B),
ϕA being the decision phase of the first decision moment (A).

10. Switched mode power supply according to claim 8, wherein p(A) = p(B) applies,
p(B) being the probability at the second decision moment (B),
p(A) being the probability at the first decision moment (A).

11. Switched mode power supply according to claim 1, wherein the load is a gas discharge lamp.

12. Illumination system comprising a gas discharge lamp and a lamp driver, wherein the lamp driver comprises a switched mode power supply according to any of claims 1-10.

13. Projection system comprising a gas discharge lamp and a lamp driver, wherein the lamp driver comprises a switched mode power supply according to any of claims 1-10.

14. Method for driving a load (11) with a substantially constant current (I_{OUT}), the method comprising the steps of:
- providing a switched mode power supply (10; 20; 30) with an inductor (L) in series with the supply output, a substantially constant voltage source, and at least one controllable coil switch (12; M1, M2) in series with the inductor (L) and the voltage source;
- repeatedly opening and closing the coil switch at a substantially constant switching frequency (f_{S}), so that, at least during a time interval larger than the current period (1/f_{S}), the coil current (I_{L}) varies between a minimum value and a maximum value of the same polarity while the load current (I_{OUT}) is substantially constant with a current ripple;
- the method further comprising the step of randomizing the switching moments of the coil switch.

15. Method according to claim 14, wherein, at a predetermined decision moment (A) having a predetermined decision phase ϕA in each current period, the coil current (I_{L}) phase is either maintained with a probability 1-p or caused to make a phase jump Δϕ = 1 - 2ϕA with a probability p.
